# EUROPÄISCHE PATENTSCHRIFT

(11) **EP 3 904 824 B1**
(45) Veröffentlichungstag und Bekanntmachung des Hinweises auf die Patenterteilung: **11.09.2024**
(21) Anmeldenummer: 20171828.5
(22) Anmeldetag: 28.04.2020
(51) Int. Cl.: G01B 7/008, G01B 11/25, G01B 21/04

(54) **VERFAHREN UND VORRICHTUNG ZUR VERMESSUNG EINES BAUTEILS, VERFAHREN ZUR QUALITÄTSPRÜFUNG UND VERFAHREN ZUR HERSTELLUNG EINES BAUTEILS**
METHOD AND DEVICE FOR MEASURING A COMPONENT, METHOD FOR QUALITY INSPECTION AND METHOD FOR MANUFACTURING A COMPONENT
PROCÉDÉ ET DISPOSITIF DE MESURE D'UN COMPOSANT, PROCÉDÉ D'ESSAI DE QUALITÉ ET PROCÉDÉ DE FABRICATION D'UN COMPOSANT

(43) Veröffentlichungstag der Anmeldung: 03.11.2021
(73) Patentinhaber: Carl Zeiss Industrielle Messtechnik GmbH, 73447 Oberkochen (DE)
(72) Erfinder: Haverkamp, Nils, 73431 Aalen (DE)
(74) Vertreter: Ramrath, Lukas

(56) Entgegenhaltungen:
- EP-A1- 3 640 583
- WO-A1-2016/040229
- DE-A1- 102004 021 892
- DE-A1- 102015 105 999
- DE-A1- 102016 120 557
- US-A1- 2004 189 944

## Beschreibung

Die Erfindung betrifft ein Verfahren und eine Vorrichtung zur Vermessung eines Bauteils sowie ein Verfahren zur Qualitätsprüfung eines Bauteils als auch ein Verfahren zur Herstellung eines Bauteils.

Aus der WO 2019/219202 A1 ist bekannt, dass ein resultierender Prüfplan für die Prüfung eines Messobjekts erzeugt wird, indem wenigstens ein Datensatz durch Vermessen des Messobjekts erzeugt wird, wobei dann datenbasiert das Messobjekt oder ein Teil des Messobjekts wenigstens einer Objektklasse zugeordnet wird, wobei dann als objektklassenspezifischer Prüfplan ein der Objektklasse zugeordneter Prüfplan bestimmt wird und der resultierende Prüfplan in Abhängigkeit des objektklassenspezifischen Prüfplans bestimmt wird. Weiter offenbart diese Druckschrift, dass das Vermessen mittels einer geeigneten Vermessungseinrichtung und/oder einem geeigneten Messsensor ausgeführt wird. Als Beispiel ist ein Koordinatenmessgerät mit einem daran angebrachten taktilen oder berührungslosen Messsensor erläutert. Auch erläutert die Druckschrift, dass das Vermessen als eine optische Objektvermessung realisiert sein kann, beispielsweise auf Basis von Triangulation, Streifenprojektion und/oder einer Kameraerfassung.

Weiter erläutert die Druckschrift, dass eine Vermessungseinrichtung zum anfänglichen Vermessen des Werkstücks und eine Vermessungseinrichtung bzw. ein Messgerät zum Durchführen der Prüfung gemäß des Prüfplans verschieden voneinander sein können.

Auch offenbart ist, dass Kombinationen der genannten Messprinzipien für das Vermessen möglich sind. Beispielsweise können Koordinatenmessgeräte verwendet werden, die ein Messobjekt mit mehreren verschiedenen Sensoren und somit auch basierend auf verschiedenen Messprinzipien vermessen können. Allerdings offenbart die Druckschrift keinerlei Hinweis bezüglich der konkreten Ausgestaltung einer Kombination der Messprinzipien bzw. Sensoren bezogen auf die anfängliche Vermessung und das Vermessen bei der Durchführung der Prüfung gemäß des Prüfplans.

Weiter bekannt ist die DE 10 2018 114 809 A1, die ein Messsystem zum dimensionalen Messen eines Messobjekts offenbart. Diese offenbart eine erste Sensoreinheit mit einem Überblickssensor und einem Detailsensor, welche parallel oder zeitlich versetzt nutzbar sind. Als Überblickssensor ist hierbei ein optischer Sensor offenbart, der mit seinem Blickfeld einen Teilbereich eines Objektträgers überblickt, in dem ein Marker oder mehrere Marker angeordnet sind. So kann eine Relativlage zwischen dem Messobjekt und den Markern, also dem Objektträger, ermittelt werden. Der Überblickssensor dient somit also zur Ermittlung einer relativen Lage zwischen einem Werkstück und Markern, die vom Überblickssensor erfasst werden können. Insbesondere offenbart die Druckschrift, dass der Sensor, der die Marker anpeilt, ein großes Blickfeld bzw. einen großen Erfassungsbereich hat. Der Sensor, der das Messobjekt antastet, soll ein hohes Auflösungsvermögen haben. Die Druckschrift offenbart aber nicht, dass die zwei verschiedenen Sensoren zur Antastung des Messobjekts genutzt werden.

Weiter bekannt ist die DE 10 2016 015 706, die ein Koordinatenmessgerät mit einem optischen Sensor zur optischen Erfassung eines zu vermessenden Werkstücks offenbart. Hierin offenbart ist ein optischer Sensor, der ein Teil eines Mittels zur Ermittlung der Daten bezüglich Position und Lage eines zu vermessenden Werkstücks bildet. Weiter offenbart ist dann, Lichteinstellungen einer Beleuchtungseinrichtung für eine Vermessung des zu vermessenden Werkstücks zu steuern, und zwar in Abhängigkeit eines Vergleichs der Position und Lage eines Referenzwerkstücks mit der Position und Lage des zu vermessenden Werkstücks.

Die DE 10 2016 120 557 A1 offenbart ein System zum dimensionalen Messen eines Objekts, mit einem optischen 3-D Sensor mit flächenhafter Antastung zur Erfassung von ersten dreidimensionalen Daten des Objekts, und mit einem Koordinatenmessgerät mit einem optischen und/oder taktilen Sensor zum dreidimensionalen Abtasten des Objekts.

Die EP 3 640 583 A1 offenbart ein Verfahren zur 3D-Erfassung eines Messobjekts.

Die DE 10 2004 021 892 A1 offenbart eine optische Messanordnung zur Verwendung an einem Messroboter sowie eine Hilfsvorrichtung und ein Verfahren zum Einmessen der optischen Messanordnung.

Die WO 2016/040229 A1 offenbart einen tragbaren Scanner.

Die US 2004/189944 A1 offenbart eine Oberflächenverifizierung und Korrektur im Herstellungsverfahren und ein Verfahren sowie ein System zur Erzeugung optischer Oberflächenprofile.

Die DE 10 2015 105 999 A1 offenbart ein Verfahren sowie eine Vorrichtung zur materialabtragenden Bearbeitung eines Werkzeugs.

Beim Betrieb von Koordinatenmesseinrichtungen, z.B. auch von Multisensor-Koordinatenmesseinrichtungen, die unter anderem auch in Verfahren zur Qualitätsprüfung eingesetzt werden, tritt regelmäßig das Problem auf, dass zu vermessende Prüfmerkmale dieser Bauteile weit einem dreidimensionalen Raum verteilt sind, wobei dies eine gleichzeitige Vermessung dieser Prüfmerkmale durch einen Sensor der Koordinatenmesseinrichtung erschwert bzw. vollständig verhindert, insbesondere wenn der Sensor einen räumlich kleinen Erfassungsbereich aufweist. Daher wird in der Regel eine zeitaufwändige Bauteileinmessung und Prüfplanerstellung durchgeführt, um anschließend sukzessive und bereichsweise die Prüfmerkmale zu vermessen. Bei Verfahren zur Qualitätsprüfung ist eine solche Bauteileinmessung insbesondere bei einer Kontrolle des Prüfungsergebnisses unerwünscht, z.B. wenn eine Klassifizierung eines Bauteils als Ausschuss verifiziert werden soll.

Ein ähnliches Problem besteht bei Bearbeitungseinrichtungen zur Herstellung von Bauteilen. Insbesondere wenn eine hohe Präzision bei der Bearbeitung gefordert ist, ist in der Regel eine lange Rüstzeit für das Anordnen des zu bearbeitenden Bauteils im Arbeitsraum der Bearbeitungseinrichtung erforderlich, um eine gewünschte Lage des Bauteils für die Bearbeitung sicherzustellen. Hierbei kann es möglich sein, dass z.B. aufgrund von Verformungen des Bauteils trotz einer eigentlich korrekten Anordnung des zu bearbeitenden Bauteils in einer Soll-Lage einzelne Abschnitte des Bauteils nicht in der gewünschten Soll-Lage des entsprechenden Abschnitts angeordnet sind. Dies kann wiederum zu einer ungenauen Bearbeitung eines solchen Abschnitts führen.

Es stellt sich daher das technische Problem, ein Verfahren und eine Vorrichtung zur Vermessung sowie ein Verfahren zur Qualitätsprüfung und ein Verfahren zur Herstellung eines Bauteils zu schaffen, die eine zeitlich schnelle und dynamisch anpassbare Vermessung des Bauteils und somit auch eine dynamisch anpassbare Qualitätsprüfung und Herstellung eines Bauteils ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Vermessung eines Bauteils. Hierbei wird eine erste, dreidimensionale Vermessung des Bauteils, vorzugsweise des gesamten Bauteils, mit einem ersten Sensor oder mehreren Sensoren einer ersten Sensormenge durchgeführt. In Abhängigkeit der während der ersten Vermessung erzeugten Messdaten kann eine dreidimensionale Repräsentation des Bauteils erzeugt werden. Diese Repräsentation kann visualisiert werden, z.B. auf einer geeigneten Anzeigeeinrichtung.

Der erste Sensor oder die Sensoren der ersten Sensormenge können hierbei Sensoren einer Koordinatenmesseinrichtung sein, die die nachfolgend erläuterte weitere Vermessung des Bauteils mit einem weiteren Sensor durchführt. Dies ist jedoch nicht zwingend. So können der erste Sensor oder die Sensoren der ersten Sensormenge auch Sensoren sein, die nicht Sensoren dieser Koordinatenmesseinrichtung sind. Es ist auch vorstellbar, dass ein oder mehrere, jedoch nicht alle, Sensoren der ersten Sensormenge Sensoren der Koordinatenmesseinrichtung sind, wobei zumindest ein Sensor der ersten Sensormenge kein Sensor der Koordinatenmesseinrichtung ist.

Ein Sensor der Koordinatenmesseinrichtung kann insbesondere ein durch die Koordinatenmesseinrichtung bewegbarer Sensor sein. Eine Koordinatenmesseinrichtung ist dem Fachmann hierbei bekannt und kann z.B. eine in Ständer- oder Portalbauweise ausgebildete Koordinatenmesseinrichtung sein.

Weiter wird ein Prüfplan für eine weitere Vermessung zumindest eines Abschnitts des Bauteils mit mindestens einem weiteren Sensor erzeugt, wobei der Prüfplan in Abhängigkeit der vom ersten Sensor oder der Sensoren der ersten Sensormenge erzeugten Messdaten erzeugt wird. Die Erzeugung des Prüfplans kann hierbei wie z.B. in der eingangs erläuterten Druckschrift WO 2019/219202 A1 beschrieben erfolgen. Zur Erzeugung des Prüfplans können die vom ersten Sensor erzeugten Messdaten ausgewertet werden.

Bei der Erzeugung des Prüfplans werden erfindungsgemäß die zu prüfenden Prüfmerkmale eines zu vermessenden Bauteils bzw. Informationen zu diesen Prüfmerkmalen festgelegt. Solche Prüfmerkmale können beispielsweise der Abstand der Mittelpunkte zweier Bohrungen, die Abweichungen von Messpunkten auf einer Freiformfläche gegenüber einer Sollform, die Lage des Mittelpunktes einer Bohrung, der Durchmesser einer Bohrung etc. sein. Ebenfalls können Informationen zu einer Lage und Gestalt des zu prüfenden Bauteils, z.B. in einem Prüf-Koordinatensystem, und Informationen zu Soll-Werten von Prüfmerkmalen festgelegt werden. Informationen zur Gestalt können z.B. in Form der in der ersten Vermessung erzeugten Messdaten in den Prüfplan integriert werden. Weiter können Toleranzangaben für ein Prüfmerkmal festgelegt werden.

Weiter können durch den Prüfplan Arbeitsanweisungen zur Durchführung der durch den Prüfplan definierten Prüfung, z.B. in Form von Befehlen, die zur Durchführung und Datenerzeugung einzustellenden Prüfparameter, z.B. Beleuchtungsparameter oder Antastkräfte, sowie die zur Durchführung zu verwendenden Prüfkomponenten, z.B. Sensoren, festgelegt sein. Auch kann ein Prüfplan Prüfparameter enthalten, die zur Laufzeit der Prüfung eingestellt oder verändert werden können, z. B. um zeitlich nachfolgende Prüf(teil)prozesse anzupassen.

Weiter kann eine zur Durchführung der Prüfung abzufahrende Prüftrajektorie, z.B. eines Sensors, durch den Prüfplan festgelegt sein. Auch kann die Prüfergebnisdokumentation durch den Prüfplan festgelegt sein.

Während der Durchführung des Prüfplans erzeugte Ist-Informationen, z.B. Messpunkte, Bilder oder Messwerte, können ebenfalls im Prüfplan abgespeichert werden.

Wie vorhergehend erläutert können dann, basierend auf dem Prüfplan, von einer Koordinatenmesseinrichtung zu erfassende Messpunkte festgelegt werden, die zur Auswertung der Prüfmerkmale notwendig sind. Dann kann ein Messablauf definiert werden, um hierdurch Messpunkte auf der Oberfläche des zu vermessenden Bauteils zu erfassen. In einem Prüfschritt bzw. Messschritt wird dann der so festgelegte Messablauf durch das Koordinatenmessgerät abgearbeitet, wodurch dann die benötigten Messpunkte gemäß dem durch den Prüfplan festgelegten Messablauf erfasst und gespeichert werden. Hiernach werden die einzelnen Prüfmerkmale des Prüfplans basierend auf den aufgenommenen Messpunkten ausgewertet und hierdurch die zur Erstellung eines Messprotokolls erforderlichen Daten gewonnen. Allgemein ausgedrückt kann ein Prüfplan somit Vorschriften (zum Beispiel in Form zu erfassender Messpunkte) enthalten, welche einen gewünschten Messablauf mittelbar oder unmittelbar beschreiben.

Der Prüfplan kann hierbei automatisiert erzeugt werden, insbesondere ohne Nutzereingabe. Allerdings ist es auch vorstellbar, dass der Prüfplan teilautomatisiert oder manuell erzeugt wird, wobei eine Nutzereingabe zur Erzeugung des Prüfplans berücksichtigt werden kann. In einem solchen Fall kann beispielsweise eine dreidimensionale Repräsentation des Bauteils, die in Abhängigkeit der vom ersten Sensor in der ersten Vermessung erzeugten Messdaten erzeugt wird, einem Nutzer angezeigt werden, wobei dann der Nutzer Parameter des Prüfplans auf Grundlage dieser Darstellung auswählt. Insbesondere bei einer teilautomatisierten Erzeugung können dem Nutzer automatisiert erzeugte Vorschläge für festzulegende Parameter des Prüfplans gemacht werden, die dieser dann durch eine Nutzereingabe bestätigen, ändern oder verwerfen kann.

Weiter wird die weitere Vermessung mit dem weiteren Sensor gemäß des erzeugten Prüfplans durchgeführt. Durch die weitere Vermessung kann eine zwei- oder dreidimensionale Vermessung des Bauteils durchgeführt werden. Der weitere Sensor kann - wie vorhergehend erläutert - ein Sensor einer Koordinatenmesseinrichtung sein. Diese kann ein oder mehrere bewegliche(s) Teil(e) umfassen, wobei der weitere Sensor an einem beweglichen Teil der Koordinatenmesseinrichtung angeordnet sein kann.

Alternativ oder kumulativ kann das zu vermessende Bauteil an/auf einem beweglichen Teil der Koordinatenmesseinrichtung angeordnet sein, z.B. auf einem Drehtisch. Zur Vermessung des Abschnitts des Bauteils kann dann eine Relativbewegung zwischen dem weiteren Sensor und dem Bauteil durchgeführt werden, um Messpunkte gemäß des Prüfplans zu erzeugen.

Erfindungsgemäß ist ein Erfassungsbereich des ersten Sensors oder der Sensoren der ersten Sensormenge größer als ein Erfassungsbereich des weiteren Sensors. Ein Erfassungsbereich der Sensoren der ersten Sensormenge bezeichnet hierbei einen räumlichen Bereich in dem das Bauteil anzuordnen ist, wenn es von allen Sensoren der ersten Sensormenge erfasst werden soll. Auch kann der Erfassungsbereich der Sensoren der ersten Sensormenge einen räumlichen Bereich bezeichnen in dem das Bauteil anzuordnen ist, um eine dreidimensionale Vermessung durch die Sensoren der ersten Sensormenge zu ermöglichen.

Insbesondere kann eine Größe des Erfassungsbereichs des ersten Sensors derart gewählt werden, dass das Bauteil vollständig im Erfassungsbereich angeordnet werden kann und somit vollständig vermessen werden kann. Weiter kann die Größe des Erfassungsbereichs des weiteren Sensors derart gewählt sein, dass das Bauteil nicht vollständig im Erfassungsbereich des weiteren Sensors angeordnet werden kann. Beispielsweise kann der Erfassungsbereich des ersten Sensors zehnmal, einhundertmal oder eintausendmal größer sein als Erfassungsbereich des weiteren Sensors.

Der erste Sensor sowie die Sensoren der ersten Sensormenge können hierbei als Überblickssensor(en) bezeichnet werden, wobei der weitere Sensor als Detailsensor bezeichnet werden kann.

Vorzugsweise ist eine Auflösung der Messdaten, die vom ersten Sensor oder von den Sensoren der ersten Sensormenge erzeugt werden, geringer als die Auflösung der Messdaten, die von dem weiteren Sensor erzeugt werden.

Das Verfahren ermöglicht in vorteilhafter Weise, dass schnell und einfach dreidimensionale Messdaten des zu vermessenden Bauteils erzeugt werden können, die dann, insbesondere als Ersatz für ein CAD-Modell, zur Prüfplanerzeugung genutzt werden kann. Beispielsweise können auf Grundlage der dreidimensionalen Repräsentation zu vermessende Prüfmerkmale ausgewählt und zu ermittelnde Maße bzw. Abweichungen, z.B. von Formmerkmalen, Oberflächenmerkmalen oder Lagemerkmalen, festgelegt werden.

Insbesondere ermöglicht das Verfahren in vorteilhafter Weise eine effiziente Prüfplangenerierung für unbekannte Bauteile oder unbekannte Abschnitte von Bauteilen, insbesondere von Bauteilen oder Abschnitten die von einer z.B. durch ein CAD-Modell festgelegten Soll-Form, beispielsweise aufgrund von Verformungen, abweichen. Ebenfalls wird ermöglicht, dass ein Prüfplan für unbekannte Bauteile so erzeugt werden kann, dass eine Kollision des weiteren Sensors mit dem Bauteil bei der weiteren Vermessung vermieden wird. Hierdurch erhöht sich eine Betriebssicherheit bei der weiteren Vermessung.

In einer weiteren Ausführungsform werden aus den in der ersten und der weiteren Vermessung erzeugten Messdaten auflösungsabhängige Messdaten erzeugt.

Beispielsweise können einer ersten Auflösung, die geringer als die oder gleich der Auflösung der vom ersten Sensor oder der ersten Sensormenge erzeugten Messdaten ist, Messdaten des Bauteils zugeordnet werden, die in der ersten Vermessung erzeugt wurden.

Weiter können einer weiteren Auflösung, die höher als die oder gleich der Auflösung der vom weiteren Sensor erzeugten Messdaten ist, Messdaten des Bauteils zugeordnet werden, die in der weiteren Vermessung erzeugt wurden. Wurde in der weiteren Vermessung nur ein Teilabschnitt des Bauteils vermessen, so können Messdaten, die während der weiteren Vermessung des Teilabschnitts erzeugt wurden, die während der ersten Vermessung des Teilabschnitts erzeugten Messdaten ersetzen oder diesen überlagert werden bzw. diese ergänzen.

Weiter können einer Auflösung, die höher als die Auflösung der vom ersten Sensor oder der ersten Sensormenge erzeugten Messdaten und geringer als die Auflösung der vom weiteren Sensor erzeugten Messdaten ist, Messdaten des Bauteils zugeordnet werden, die aus den während der Vermessungen erzeugten Messdaten fusioniert sind, beispielsweise durch eine geeignete Interpolation. Wurde in der weiteren Vermessung nur ein Teilabschnitt des Bauteils vermessen, so können derart fusionierte Messdaten nur für den Teilabschnitt erzeugt werden, wobei dieser fusionierten Messdaten dann die während der ersten Vermessung des Teilabschnitts erzeugten Messdaten ersetzen oder diesen überlagert werden können.

Somit wird es weiter ermöglicht, das Bauteil auflösungsabhängig und in Abhängigkeit der in den Vermessungen erzeugten Messdaten darzustellen. Soll eine Darstellung mit einer bestimmten Auflösung erfolgen, so können die Messdaten für die Darstellung genutzt werden, die der entsprechenden Auflösung zugeordnet sind. In einer solchen auflösungsabhängigen Darstellung kann z.B. das Bauteil oder ein Abschnitt davon in Abhängigkeit der in der ersten Vermessung erzeugten Messdaten zwei- oder dreidimensional dargestellt werden. Weiter kann in dieser Darstellung ein Abschnitt des Bauteils bzw. ein Teilabschnitt des Abschnitts des Bauteils in Abhängigkeit der in der weiteren Vermessung erzeugten Messdaten zwei- oder dreidimensional dargestellt werden. Diese Darstellung kann durch ein Ersetzen oder Überlagern erfolgen, wobei also der Darstellung auf Grundlage der in der ersten Vermessung erzeugten Messdaten eine Darstellung der auf Grundlage der in der weiteren Vermessung erzeugten Messdaten überlagert wird oder ein Teil der Darstellung auf Grundlage der in der ersten Vermessung erzeugten Messdaten durch eine Darstellung der auf Grundlage der in der weiteren Vermessung erzeugten Messdaten ersetzt wird.

Mit anderen Worten kann einer Darstellung des vermessenen Bauteils mit einer im Vergleich gröberen Auflösung, die in Abhängigkeit der in der ersten Vermessung erzeugten Messdaten erfolgt, eine Darstellung eines Abschnitts des vermessenen Bauteils mit einer im Vergleich feineren Auflösung überlagert werden oder es kann die Darstellung mit der gröberen Auflösung zumindest in einem Abschnitt durch eine Darstellung mit feinerer Auflösung ersetzt werden.

Hierdurch ergibt sich in vorteilhafter Weise eine gute und einfach erfassbare Darstellung des Bauteils, insbesondere in verschiedenen Auflösungen. So kann beispielsweise in einer groben Auflösung das Bauteil oder der Abschnitt nur in Abhängigkeit der in der ersten Vermessung erzeugten Messdaten dargestellt werden, wobei in einer im Vergleich feineren Auflösung dann zusätzlich auch die Darstellung des Abschnitts des Bauteils erfolgt, der in der weiteren Vermessung vermessen wurde.

Entsprechend können in einer (teil-)automatisierten Qualitätsprüfung Prüfkriterien auflösungsabhängig ausgewertet werden. So kann einem Prüfkriterium eine Auflösung zugeordnet werden, wobei die Auswertung eines Prüfkriteriums die Auswertung der Messdaten umfasst, die der entsprechenden Auflösung zugeordnet sind.

Werden mehrere Prüfkriterien ausgewertet, so kann zumindest ein Prüfkriterium nur in Abhängigkeit der in der ersten Vermessung erzeugten Messdaten und mindestens ein weiteres Prüfkriterium nur in Abhängigkeit der in der weiteren Vermessung erzeugten Messdaten ausgewertet werden. Auch kann ein weiteres Prüfkriterium in Abhängigkeit der vorhergehend erläuterten fusionierten, überlagerten oder teilweise ersetzten Messdaten ausgewertet werden.

Hierdurch ergibt sich in vorteilhafter Weise eine zeitlich schnelle und effiziente Auswertung von Prüfkriterien, da die Auswertung von manchen Prüfkriterien nicht zwingend die Auswertung aller erzeugten Messdaten oder die Auswertung der in der Regel hohe Datenmenge der in der weiteren Vermessung erzeugten Messdaten erfordert.

Dies ermöglicht eine zeitlich schnelle und mit weniger Rechenaufwand durchführbare Auswertung von Prüfkriterien. Aus entsprechenden Gründen ermöglicht dies eine zeitlich schnelle und weniger Rechenaufwand beanspruchende Darstellung des Messergebnisses.

In einer weiteren Ausführungsform erfolgt eine auflösungsabhängige Darstellung des Bauteils in Abhängigkeit der erzeugten Messdaten. Dies und entsprechende Vorteile wurden vorhergehend erläutert.

In einer weiteren Ausführungsform wird in Abhängigkeit der in der ersten Vermessung erzeugten Messdaten mindestens ein Detailvermessungsabschnitt des Bauteils festgelegt, der dann in der weiteren Vermessung mit dem weiteren Sensor vermessen wird. Diese Festlegung kann automatisiert oder (teil-)automatisiert erfolgen. Auch ist es vorstellbar, dass die Festlegung in Abhängigkeit einer Nutzereingabe, insbesondere über eine geeignete Eingabeeinrichtung, erfolgt, insbesondere auch während einer teilautomatisierten Festlegung. Hierdurch ergibt sich in vorteilhafter Weise, dass zeitlich schnell die in der weiteren Vermessung zu vermessenden Abschnitte des Bauteils festgelegt werden können, wodurch in der weiteren Vermessung keine Notwendigkeit zur Vermessung des gesamten Bauteils besteht. Hierdurch wiederum kann die Vermessung des Bauteils in der weiteren Vermessung zeitlich beschleunigt werden.

In einer weiteren Ausführungsform wird in Abhängigkeit der in der ersten Vermessung erzeugten Messdaten eine Lage des Bauteils bestimmt.

Die Lage kann hierbei in einem Referenzkoordinatensystem bestimmt werden, beispielsweise in einem globalen Referenzkoordinatensystem oder einem Koordinatensystem einer Koordinatenmesseinrichtung, die dann die weitere Vermessung durchführt. Selbstverständlich kann auch ein davon verschiedenes Referenzkoordinatensystem gewählt werden. Durch die Bestimmung der Lage kann der Prüfplan lagespezifisch erzeugt werden, also in einer an eine aktuelle Lage des Bauteils im Referenzkoordinatensystem angepassten Art und Weise.

Hierdurch kann in vorteilhafter Weise die zur Bauteileinmessung benötigte Zeitdauer verringert werden, da diese bereits vor der Erzeugung des Prüfplans erfolgt. Insbesondere ist es also nicht mehr notwendig, nach der Erzeugung eines Prüfplans eine zusätzliche Bauteileinmessung durchzuführen. Die Bauteileinmessung bezeichnet hierbei einen Vorgang zur Bestimmung der Lage des Bauteils in einem Referenzkoordinatensystem. Das Referenzkoordinatensystem kann ein werkstückfestes Koordinatensystem, ein maschinenfestes Koordinatensystem, ein globales Koordinatensystem oder ein anderes Koordinatensystem sein. Vorzugsweise ist das Koordinatensystem ein koordinatenmesseinrichtungsfestes Koordinatensystem.

In einer weiteren Ausführungsform wird mindestens eine Eigenschaft eines Prüfmerkmals in Abhängigkeit der in der ersten Vermessung erzeugten Messdaten bestimmt. Ein Prüfmerkmal kann ein Prüfelement oder ein Merkmal davon sein. Weiter wird mindestens eine weitere Eigenschaft des Prüfmerkmals oder mindestens eine Eigenschaft eines weiteren Prüfmerkmals in Abhängigkeit der in der weiteren Vermessung erzeugten Messdaten bestimmt. Somit können verschiedene Eigenschaften eines Prüfmerkmals in Abhängigkeit der in der ersten und der in der weiteren Vermessung erzeugten Messdaten bestimmt werden. Z.B. kann eine erste Eigenschaft eine Farbe sein, die z.B. in Abhängigkeit der in der ersten Vermessung erzeugten Messdaten bestimmt werden kann. Eine weitere Eigenschaft kann z.B. eine dimensionelle Größe sein, z.B. eine Länge, einer Breite oder ein Durchmesser, der in Abhängigkeit der in der weiteren Vermessung erzeugten Messdaten bestimmt werden kann. Alternativ können die Eigenschaften verschiedener Prüfmerkmale in Abhängigkeit der in der ersten und der in der weiteren Vermessung erzeugten Messdaten bestimmt werden. So kann eine Eigenschaft eines ersten Prüfmerkmals z.B. in Abhängigkeit der in der ersten Vermessung erzeugten Messdaten und eine Eigenschaft eines weiteren Prüfmerkmals in Abhängigkeit der in der weiteren Vermessung erzeugten Messdaten bestimmt werden.

Die Bestimmung der Prüfmerkmaleigenschaften kann hierbei während einer Qualitätsprüfung erfolgen. Insbesondere kann die Bestimmung auch in der Auswertung der erzeugten Messdaten gemäß des Prüfplans erfolgen. Dieser kann also zusätzlich zur Festlegung der weiteren Vermessung auch die Auswertung der Prüfmerkmaleigenschaften festlegen. Hierdurch ergibt sich in vorteilhafter Weise die vorhergehend erläuterte effiziente Bestimmung von Prüfmerkmaleigenschaften und somit auch eine effiziente und schnell durchführbare Qualitätsprüfung.

In einer weiteren Ausführungsform ist der erste Sensor oder mindestens ein Sensor der ersten Sensormenge ein Ultraschallsensor. Dadurch ergibt sich in vorteilhafter Weise eine zuverlässige dreidimensionale Erfassung des Bauteils mit einem großen Erfassungsbereich des ersten Sensors oder der Sensoren der ersten Sensormenge, wobei die Erfassung zusätzlich zeitlich schnell erfolgt.

Alternativ ist der erste Sensor oder mindestens ein Sensor der ersten Sensormenge ein optischer Sensor. Auch hierdurch ergibt sich eine erläuterte schnelle und zuverlässige Erfassung.

Alternativ ist der erste Sensor oder mindestens ein Sensor der ersten Sensormenge ein taktiler Sensor oder ein Multisensor, z.B. ein Multisensor, der einen taktilen Sensor und mindestens einen, vorzugsweise zwei oder mehr als zwei, optische(n) Sensor(en) umfasst.

Beispielsweise kann der taktile Sensor ein Zentriersensor sein, der zur Erfassung einer durch ein Zentrierelement oder einen Zentrierabschnitt des Bauteils festgelegte Referenzposition oder -lage dient. Das Zentrierelement oder der Zentrierabschnitt des Bauteils kann z.B. als Zentrierkonus ausgebildet sein. Insbesondere in diesem Fall kann ein den taktilen Sensor umfassender Multisensor einen oder mehrere optische(n) Sensor(en) umfassen, die zur Erfassung eines Drehwinkels des Bauteils oder des taktilen Sensors dienen. Hierdurch wird eine 3D-Einmessung eines entsprechenden Bauteils ermöglicht.

Weiter alternativ ist der erste Sensor oder zumindest ein Sensor der ersten Sensormenge ein tomografischer Sensor, vorzugsweise ein Röntgensensor. Allerdings kann der Sensor auch ein Sensor zur Erzeugung von Messdaten mit anderen tomografischen Verfahren sein.

Durch die Verwendung der erläuterten Sensoren ergibt sich in vorteilhafter Weise eine zuverlässige dreidimensionale Vermessung mit hoher Messgenauigkeit.

In einer weiteren Ausführungsform wird die dreidimensionale Vermessung mit einem structure-from-motion-basierten Verfahren durchgeführt. Hierdurch ergibt sich in vorteilhafter Weise zeitlich schnelle und eine einfach durchführbare dreidimensionale Erfassung, wobei ebenfalls in vorteilhafter Weise handelsübliche Bilderfassungseinrichtungen genutzt werden können.

In einer alternativen Ausführungsform wird die dreidimensionale Vermessung mit einem structure-from-shading-basierten Verfahren durchgeführt. Auch hierdurch ergeben sich die genannten Vorteile.

In einer weiteren Ausführungsform wird die dreidimensionale Vermessung mit einem photogrammetrischen Verfahren durchgeführt. Die photogrammetrische Erfassung hat den Vorteil, dass eine mobile und flexible Bauteilerfassung erfolgen kann. Weiter bieten photogrammetriebasierte Verfahren trotz der zeitlich schnellen Vermessung eine hohe Auflösung.

Alternativ kann die dreidimensionale Vermessung mit einem streifenprojektionsbasierten Verfahren, mit einem linienprojektionsbasierten Verfahren, mit einem random-pattern-projektionsbasierten Verfahren, mit einem stereoskopiebasierten Verfahren, mit einem tomografischen Verfahren oder mit einem lichtfeldtechnikbasierten Verfahren erzeugt werden.

Der Vorteil eines streifenprojektionsbasierten Verfahrens ist die hohe Messgenauigkeit trotz der geringen Messdauer. Der Vorteil des linienprojektionsbasierten Verfahrens ist die hohe Zuverlässigkeit und die geringen Kosten. Der Vorteil eines stereoskopiebasierten Verfahrens ist die hohe Verfügbarkeit der hierzu benötigten Bilderfassungseinrichtungen und Algorithmen. Der Vorteil eines random-pattern-projektionsbasierten Verfahrens ist die hohe Messgeschwindigkeit. In einem tomografischen Verfahren, insbesondere in einem durchstrahlungs- oder durchleuchtungsbasiertes Verfahren, kann Strahlung, z.B. Röntgen- oder Neutronenstrahlung, erzeugt, durch das Bauteil gestrahlt und dann wieder erfasst werden, wobei die erfasste Strahlung zur dreidimensionalen Vermessung ausgewertet werden kann. Hierdurch ergibt sich in vorteilhafter Weise eine hohe Messgenauigkeit, insbesondere auch bei Bauteilen mit innenliegenden oder zumindest teilweise eingeschlossenen Prüfmerkmalen.

Der Vorteil eines lichtfeldtechnikbasierten Verfahrens ist die hohe Informationsdichte der erzeugten Daten bei geringer Messdauer, die eine Auswertung der Messdaten aus verschiedenen Blickwinkeln ermöglicht.

In einer weiteren Ausführungsform wird der weitere Sensor während der weiteren Vermessung unabhängig von dem ersten Sensor oder von mindestens einem Sensor, vorzugsweise unabhängig von allen Sensoren, der ersten Sensormenge bewegt. Insbesondere sind also der weitere Sensor und der erste Sensor bzw. mindestens ein Sensor der ersten Sensormenge nicht ortsfest relativ zueinander angeordnet, insbesondere starr aneinander befestigt. Hierdurch ergibt sich in vorteilhafter Weise eine hohe Flexibilität bei der Bauteilerfassung in den beiden Vermessungen, da zumindest der weitere Sensor unabhängig von dem ersten Sensor oder einem Sensor der ersten Sensormenge bewegt werden kann. Insbesondere muss also nicht zwingend während einer Bewegung des weiteren Sensors während der weiteren Vermessung der erste Sensor oder alle Sensoren der ersten Sensormenge bewegt werden. Dies reduziert einen zur Vermessung benötigten Energiebedarf.

In einer weiteren Ausführungsform ist der weitere Sensor an mindestens einem beweglichen Teil einer Koordinatenmesseinrichtung angeordnet, wobei der erste Sensor oder mindestens ein Sensor der ersten Sensormenge nicht an dem beweglichen Teil angeordnet ist. Insbesondere kann der erste Sensor oder mindestens ein Sensor der ersten Sensormenge an einem nicht beweglichen Teil der Koordinatenmesseinrichtung angeordnet ist oder nicht Teil der Koordinatenmesseinrichtung sein. Auch hierdurch ergibt sich in vorteilhafter Weise, dass während einer Bewegung des weiteren Sensors während der weiteren Vermessung der erste Sensor oder alle Sensoren der ersten Sensormenge nicht bewegt werden müssen. Dies reduziert einen zur Vermessung benötigten Energiebedarf.

In einer weiteren Ausführungsform ist an einem oder mehreren Sensor(en) der ersten Sensormenge mindestens ein optisch erfassbarere Marker angeordnet, wobei in Abhängigkeit einer Erfassung, insbesondere einer Abbildung, des Markers durch einen weiteren Sensor der ersten Sensormenge eine Relativlage zwischen den Sensoren der ersten Sensormenge bestimmt wird. In Abhängigkeit der derart bestimmten Relativlagen kann dann eine Lage des Erfassungsbereichs der Sensoren der ersten Sensormenge im Referenzkoordinatensystem bestimmt werden. Auch kann hiermit zuverlässig eine Lage der vom Bauteil durch die Sensoren der ersten Sensormenge erzeugten Messpunkte im Referenzkoordinatensystem bestimmt werden. Weiter ergibt sich in vorteilhafter Weise, dass mehrere Sensoren der ersten Sensormenge flexibel angeordnet werden können, wobei dennoch die Zuordnung von Koordinaten der erzeugten Messpunkte zu Referenzkoordinatensystem gewährleistet ist.

Weiter vorgeschlagen wird ein Verfahren zur Qualitätsprüfung eines Bauteils, wobei das Bauteil in einem zu prüfenden Zustand bereitgestellt wird. Weiter wird eine erste Qualitätsprüfung des Bauteils durchgeführt. Hierzu kann insbesondere mindestens ein Prüfkriterium ausgewertet werden. Zur Auswertung des mindestens einen Prüfkriteriums kann mindestens eine Eigenschaft eines Prüfmerkmals des Bauteils bestimmt werden. Vorzugsweise werden jedoch mehrere Eigenschaften von einem Prüfmerkmal oder Eigenschaften von mehreren Prüfmerkmalen bestimmt. Bei der Durchführung der ersten Qualitätsprüfung, insbesondere zur Bestimmung der Eigenschaft(en), kann eine Vermessung des Bauteils durchgeführt werden, z.B. durch den ersten Sensor oder die Sensoren der ersten Sensormenge oder aber durch den weiteren Sensor. Allerdings kann die Vermessung auch durch mindestens einen von diesen Sensoren verschiedenen Sensor erfolgen.

Weiter wird nach dieser ersten Qualitätsprüfung ein Verfahren zur Vermessung gemäß einer der in dieser Offenbarung beschriebenen Ausführungsformen durchgeführt, wenn das Bauteil ein Qualitätskriterium oder mehrere Qualitätskriterien bei der ersten Qualitätsprüfung nicht erfüllt. Wird also das Bauteil durch die erste Qualitätsprüfung als Ausschuss klassifiziert, so kann eine (erneute) Vermessung gemäß einer der in dieser Offenbarung beschriebenen Ausführungsformen erfolgt. Weiter wird dann in Abhängigkeit mindestens der Messdaten, die in der weiteren Vermessung erzeugt wurden, eine Verifikations-Qualitätsprüfung durchgeführt. Beispielsweise kann mindestens eine Eigenschaft von mindestens einem Prüfmerkmal in Abhängigkeit der in der weiteren Vermessung erzeugten Messdaten bestimmt werden, wobei die Verifikations-Qualitätsprüfung dann in Abhängigkeit der derart bestimmten Eigenschaft durchgeführt wird.

Zusätzlich kann die Verifikations-Qualitätsprüfung jedoch auch in Abhängigkeit der Messdaten, die in er ersten Vermessung erzeugt wurden, durchgeführt werden. Beispielsweise kann zusätzlich mindestens eine Eigenschaft von mindestens einem Prüfmerkmal in Abhängigkeit der in der ersten Vermessung erzeugten Messdaten bestimmt werden, wobei die Verifikations-Qualitätsprüfung dann zusätzlich in Abhängigkeit der derart bestimmten Eigenschaft durchgeführt wird.

Mit anderen Worten ist es möglich, in einer ersten Qualitätsprüfung aussortierte Bauteile erneut zu prüfen. Dies ist insbesondere dann von Vorteil, wenn das Bauteil einen hohen Wert aufweist und es daher wirtschaftlich sinnvoll ist, fehlerhaft aussortierte Ausschussteile von korrekt aussortierten Ausschussteilen zu trennen. Das vorgeschlagene Verfahren zur Vermessung ermöglicht für derartige Bauteile eine zeitlich schnelle und bauteilspezifische Erzeugung eines Prüfplans und insbesondere auch die Erzeugung von qualitätskriteriumspezifischen Prüfplänen. Hierbei kann im Prüfplan nur die Bestimmung derjenigen Eigenschaften eines oder mehrerer Prüfmerkmale/s festgelegt werden, die für die Überprüfung des Ergebnisses der ersten Qualitätsprüfung notwendig sind. Erfüllt das Bauteil alle Prüfkriterien der Verifikations-Qualitätsprüfung, so kann es als Nicht-Ausschuss klassifiziert bzw. die Klassifikation als Ausschuss aufgehoben werden. Erfüllt das Bauteil mindestens ein Prüfkriterium oder mehrere Prüfkriterien der Verifikations-Qualitätsprüfung nicht, so kann die Klassifikation als Ausschuss bestätigt werden.

In einer weiteren Ausführungsform wird nach der Verifikations-Qualitätsprüfung eine weitere Qualitätsprüfung eines, insbesondere weiteren, Bauteils in Abhängigkeit der in einer Vermessung des Bauteils mit dem ersten Sensor oder der ersten Sensormenge erzeugten Messdaten durchgeführt, wobei diese weitere Qualitätsprüfung in Abhängigkeit eines Ergebnisses der vorangegangenen Verifikations- Qualitätsprüfung angepasst wird. Beispielsweise können Messdaten, die in einer ersten Vermessung eines Bauteils während einer vorherigen Verifikations-Qualitätsprüfung bestimmt wurden, Eingangsdaten für ein KI-basiertes Verfahren zur Qualitätsprüfung oder für ein auf maschinellem Lernen basierten Verfahren dienen. Diese Messdaten und das entsprechende Ergebnis können hierbei Trainingsdaten für die Parametrisierung eines solchen Verfahrens bilden. Ein solches Verfahren kann insbesondere ein auf neuronalen Netzen basiertes Verfahren sein. Dann kann bei der vorhergehend erläuterten weiteren Qualitätsprüfung das derart parametrisierte Verfahren die Qualitätsprüfung allein durch Auswertung der vom ersten Sensor oder der ersten Sensormenge erzeugten Messdaten durchführen.

Entsprechend ist es möglich, den Prüfplan für die weitere Vermessung mit dem weiteren Sensor zusätzlich in Abhängigkeit von vorhergehend erzeugten Prüfplänen zu erzeugen. In diesem Fall können beispielsweise die Messdaten, die in der ersten Vermessung des Bauteils erzeugt wurden, und der auf diesen Daten erzeugte Prüfplan als Trainingsdaten für ein KI-basiertes Verfahren oder ein auf maschinellem Lernen basierten Verfahren genutzt werden, insbesondere um ein solches Verfahren zu parametrisieren.

Dann kann ein derartiges Verfahren bei nachfolgend durchgeführten Vermessungen, insbesondere auch von anderen Bauteilen, genutzt werden, um automatisiert Prüfpläne in Abhängigkeit der in der ersten Vermessung erzeugten Messdaten zu erzeugen.

Hierdurch ergibt sich in vorteilhafter Weise, dass die Zeitdauer zur Qualitätsprüfung bzw. zur Erzeugung eines Prüfplans weiter verringert werden kann, da hierzu nur in der ersten Vermessung erzeugte Messdaten ausgewertet werden müssen.

Weiter vorgeschlagen wird ein Verfahren zur Herstellung eines Bauteils, wobei vor einem Bearbeitungsschritt zur Herstellung ein Verfahren zur Vermessung gemäß einer der in dieser Offenbarung beschriebenen Ausführungsformen durchgeführt wird und mindestens eine Lage des Bauteils in Abhängigkeit der in der ersten und/oder der weiteren Vermessung erzeugten Messdaten bestimmt wird.

Weiter wird der Bearbeitungsschritt zur Bearbeitung des Bauteils in Abhängigkeit der derart bestimmten Lage durchgeführt.

Alternativ oder kumulativ wird nach einem Bearbeitungsschritt ein Verfahren zur Vermessung gemäß einer der in dieser Offenbarung beschriebenen Ausführungsformen durchgeführt und mindestens ein Ist-Bearbeitungszustand des Bauteils in Abhängigkeit der in der ersten und/oder der weiteren Vermessung erzeugten Messdaten bestimmt. Weiter wird ein weiterer Bearbeitungsschritt zur Bearbeitung des Bauteils durchgeführt, falls der Ist-Bearbeitungszustand um mehr als vorbestimmtes Maß von einem Soll-Bearbeitungszustand abweicht. Weiter kann die Bearbeitung des Bauteils im weiteren Bearbeitungsschritt derart durchgeführt werden, dass die Abweichung zwischen Ist-Bearbeitungszustand und Soll-Bearbeitungszustand verringert, insbesondere minimiert, wird.

Die Bestimmung des Ist-Bearbeitungszustands des Bauteils in Abhängigkeit der in der ersten Vermessung erzeugten Messdaten ermöglicht hierbei in vorteilhafter Weise eine grobe Fehlstellenerfassung, wobei die Bestimmung des Ist-Bearbeitungszustands des Bauteils in Abhängigkeit der in der weiteren Vermessung erzeugten Messdaten dann eine feine Fehlstellenerfassung ermöglicht, insbesondere eine Bestimmung der aktuellen Geometrie mit hoher Auflösung und somit des Ist-Bearbeitungszustands.

Hierdurch ergibt sich in vorteilhafter Weise, dass keine zeitaufwändige Präzisionsbeladung einer Bearbeitungsmaschine erforderlich ist, da die Lage des herzustellenden Bauteils relativ zur Bearbeitungsmaschine zeitlich schnell und zuverlässig mit einem Verfahren gemäß einer der in dieser Offenbarung beschriebenen Ausführungsform bestimmbar ist.

Dies verringert sogenannte Rüstzeiten der Bearbeitungsmaschine. Gleichzeitig ermöglicht die Verwendung des vorgeschlagenen Verfahrens, dass eine Lage eines Bauteils in einem bearbeitungsmaschinenfesten Koordinatensystem während der Bearbeitung, insbesondere zwischen zwei aufeinanderfolgenden Bearbeitungsschritten, verändert werden kann, wobei ein Verfahren zur Vermessung durchgeführt wird, um die Lage des Bauteils erneut zu bestimmen und dann den folgenden Bearbeitungsschritt auszuführen.

Die Bestimmung der Lage des Bauteils in Abhängigkeit der in der weiteren Vermessung erzeugten Messdaten ermöglicht in vorteilhafter Weise eine sehr genaue Lagebestimmung, insbesondere von Detailabschnitten des Bauteils, insbesondere von zu bearbeitenden oder zu bearbeitenden Abschnitten.

Dies wiederum ermöglicht, dass Bearbeitungsmaschinen mit eingeschränkten Freiheitsgraden zur Bearbeitung eines Bauteils, die aktuell nicht zur (Präzisions-) Bearbeitung von Bauteilen genutzt werden können, in die Lage versetzt werden, eine vollständige (Präzisions-)Bearbeitung durchzuführen, wobei dies die Änderung der Lage des Bauteils und die neue, zeitlich schnelle Erfassung der Lage ermöglicht wird.

Weiter ergibt sich in vorteilhafter Weise, dass in zuverlässiger Weise und zeitlich schnell ein Bedarf für eine Nachbearbeitung detektiert werden kann, wodurch sich in vorteilhafter Weise ein Ausschuss bei der Herstellung von Bauteilen reduziert.

Weiter vorgeschlagen wird eine Vorrichtung zur Vermessung eines Bauteils, wobei die Vorrichtung einen ersten Sensor oder Sensoren einer ersten Sensormenge, einen weiteren Sensor und eine Auswerteeinrichtung umfasst. Die Auswerteeinrichtung kann hierbei als Recheneinrichtung ausgebildet sein. Diese kann einen Mikrocontroller oder eine integrierte Schaltung umfassen oder als solche(r) ausgebildet sein. Durch den ersten Sensor oder die Sensoren der ersten Sensormenge ist eine erste, dreidimensionale Vermessung des Bauteils durchführbar, wobei durch die Auswerteeinrichtung ein Prüfplan für eine weitere Vermessung zumindest eines Abschnitts des Bauteils mit mindestens einem weiteren Sensor in Abhängigkeit der vom ersten Sensor oder der Sensoren der ersten Sensormenge erzeugten Messdaten erzeugbar ist, wobei durch den weiteren Sensor die weitere Vermessung gemäß des Prüfplans durchführbar ist. Weiter kann durch die Auswerteeinrichtung eine Auswertung der in der ersten Vermessung erzeugten Messdaten, insbesondere eine Bestimmung von einer Eigenschaft eines Prüfmerkmals, durchgeführt werden. Hierbei kann eine Steuereinrichtung die Vermessung gemäß des weiteren Prüfplans steuern, insbesondere eine Relativbewegung zwischen dem Bauteil und dem weiteren Sensor. Die Steuereinrichtung kann hierbei durch die erläuterte Auswerteeinrichtung ausgebildet sein. Auch kann die Steuereinrichtung eine von der Auswerteeinrichtung verschiedene Einrichtung sein, wobei die Steuereinrichtung auch als eine Recheneinrichtung ausgebildet sein kann.

Weiter kann die Vorrichtung eine Auswerteeinrichtung zur Auswertung der vom weiteren Sensor erzeugten Messdaten, insbesondere zur Bestimmung einer Eigenschaft eines Prüfmerkmals, umfassen. Dies kann von der vorhergehend erläuterten Auswerteeinrichtung ausgebildet oder von dieser verschieden sein.

Erfindungsgemäß ist ein Erfassungsbereich des ersten Sensors oder der Sensoren der ersten Sensormenge größer als ein Erfassungsbereich des weiteren Sensors.

Der erste Sensor oder die Sensoren der ersten Sensormenge können insbesondere Bilderfassungseinrichtungen, weiter insbesondere CCD- oder CMOS-Kameras, sein. Diese können konstante intrinsische Eigenschaften aufweisen.

Hierdurch ergibt sich in vorteilhafter Weise eine Vorrichtung zur Durchführung eines Verfahrens zur Vermessung eines Bauteils gemäß einer der in dieser Offenbarung beschriebenen Ausführungsformen mit den entsprechend erläuterten Vorteilen. Ebenfalls ergibt sich in vorteilhafter Weise, dass ein Verfahren zur Qualitätsprüfung eines Bauteils und ein Verfahren zur Herstellung eines Bauteils gemäß einer der in dieser Offenbarung beschriebenen Ausführungsformen mit einer solchen Vorrichtung durchgeführt werden kann. Hierbei kann die Vorrichtung zur Vermessung eines Bauteils Teil einer Bearbeitungseinrichtung zur Durchführung eines Verfahrens zur Herstellung eines Bauteils sein. Auch kann die Vorrichtung zur Vermessung Teil einer Vorrichtung zur Qualitätsprüfung eines Bauteils sein.

Die Vorrichtung zur Vermessung des Bauteils kann hierbei eine Koordinatenmesseinrichtung umfassen, wobei zumindest der weitere Sensor ein Sensor der Koordinatenmesseinrichtung sein kann. Es ist möglich, dass der erste Sensor oder mindestens ein Sensor der ersten Sensormenge ein Sensor der Koordinatenmesseinrichtung ist. Allerdings ist es auch möglich, dass der erste Sensor oder mindestens ein Sensor der ersten Sensormenge nicht Teil der Koordinatenmesseinrichtung ist. Beispielsweise kann ein solcher Sensor in ein mobiles Endgerät integriert sein, beispielsweise ein Mobilfunktelefon oder ein Tablet-PC.

Es ist weiter möglich, dass die Vorrichtung ein eingebettetes System umfasst, wobei dieses eingebettete System den ersten Sensor oder mindestens einen Sensor der ersten Sensormenge sowie eine Auswerteeinrichtung umfasst oder ausbildet. In einer solchen Ausführungsform kann das eingebettete System die Messdaten, die in der ersten Vermessung erzeugt werden, verarbeiten und auswerten. Insbesondere kann das eingebettete System die Erzeugung der Messdaten für eine Repräsentation des Bauteils durchführen. Weiter ist es möglich, dass eine vorbestimmte Eigenschaft eines Prüfmerkmals, z.B. eine Farbe, eines Bauteils in Abhängigkeit der in der ersten Vermessung erzeugten Messdaten bestimmt wird, wobei eine weitere, davon verschiedene Eigenschaft dann in Abhängigkeit der in der weiteren Vermessung erzeugten Messdaten bestimmt werden. Hierdurch kann die Bestimmung von Eigenschaften in Bezug auf den weiteren Sensor und eine Auswerteeinrichtung zur Auswertung der in weiteren Vermessung erzeugten Messdaten ausgelagert werden, wodurch auch die Leistungsfähigkeit des weiteren Sensors bzw. der ihm zugeordneten Auswerteeinrichtung und somit Kosten reduziert werden können.

Weiter beschrieben wird ein Programm, welches, wenn es auf oder durch einen Computer ausgeführt wird, den Computer veranlasst, einen, mehrere oder alle Schritte eines Verfahrens zur Vermessung eines Bauteils, eines Verfahrens zur Qualitätsprüfung oder eines Verfahrens zur Herstellung eines Bauteils gemäß einer der in dieser Offenbarung erläuterten Ausführungsformen durchzuführen. Alternativ oder kumulativ wird ein Programmspeichermedium oder Computerprogrammprodukt beschrieben, auf oder in dem das Programm gespeichert ist, insbesondere in einer nicht vorübergehenden, z.B. in einer dauerhaften, Form. Alternativ oder kumulativ wird ein Computer beschrieben, der dieses Programmspeichermedium umfasst. Weiter alternativ oder kumulativ wird ein Signal beschrieben, beispielsweise ein digitales Signal, welches Informationen kodiert, die das Programm repräsentieren und welches Code-Mittel umfasst, die adaptiert sind, einen, mehrere oder alle Schritte des in dieser Offenbarung dargestellten eines Verfahrens zur Vermessung eines Bauteils, eines Verfahrens zur Qualitätsprüfung oder eines Verfahrens zur Herstellung eines Bauteils durchzuführen. Das Signal kann ein physikalisches Signal, z.B. ein elektrisches Signal, sein, welches insbesondere technisch oder maschinell erzeugt wird. Das Programm kann den Computer auch dazu veranlassen, eine Vermessung des Bauteils gemäß des Prüfplans, beispielsweise mittels einer Koordinatenmesseinrichtung, auszuführen.

Weiter kann das Verfahren zur Vermessung eines Bauteils, zur Qualitätsprüfung oder zur Herstellung eines Bauteils ein computerimplementiertes Verfahren sein. So können z.B. ein, mehrere oder alle Schritte des Verfahrens durch einen Computer ausgeführt werden. Eine Ausführungsform für das computerimplementierte Verfahren ist die Benutzung des Computers zur Durchführung einer Datenverarbeitungsmethode. Der Computer kann z.B. zumindest eine Recheneinrichtung, insbesondere einen Prozessor, und z.B. zumindest eine Speichereinrichtung umfassen, um die Daten, insbesondere technisch, zu verarbeiten, z.B. elektronisch und/oder optisch. Ein Computer kann hierbei jede Art von Datenverarbeitungseinrichtung sein. Ein Prozessor kann ein halbleiterbasierter Prozessor sein.

Hierdurch ergibt sich in vorteilhafter Weise ein Programm, durch welches das/die vorhergehend erläuterte(n) Verfahren mit den bezüglich gekannten Vorteilen durchführbar ist/sind.

Die Erfindung wird anhand eines Ausführungsbeispiels näher erläutert. Die Figuren zeigen:
- Fig. 1: ein schematisches Flussdiagramm eines erfindungsgemäßen Verfahrens zur Vermessung eines Bauteils,
- Fig. 2: ein schematisches Flussdiagramm eines erfindungsgemäßen Verfahrens zur Qualitätsprüfung eines Bauteils,
- Fig. 3: ein schematisches Flussdiagramm eines erfindungsgemäßen Verfahrens zur Herstellung eines Bauteils in einer ersten Ausführungsform,
- Fig. 4: ein schematisches Flussdiagramm eines erfindungsgemäßen Verfahrens zur Herstellung eines Bauteils in einer weiteren Ausführungsform,
- Fig. 5: eine schematische Darstellung einer erfindungsgemäßen Vorrichtung zur Vermessung eines Bauteils gemäß einer ersten Ausführungsform und
- Fig. 6: eine schematische Darstellung einer Vorrichtung zur Vermessung eines Bauteils gemäß einer weiteren Ausführungsform.

Nachfolgend bezeichnen gleiche Bezugszeichen Elemente mit gleichen oder ähnlichen technischen Merkmalen.

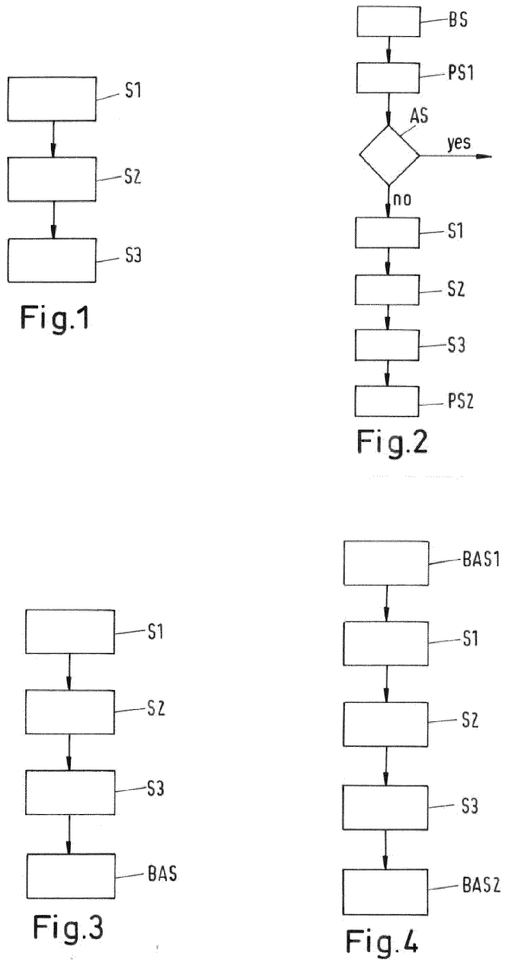

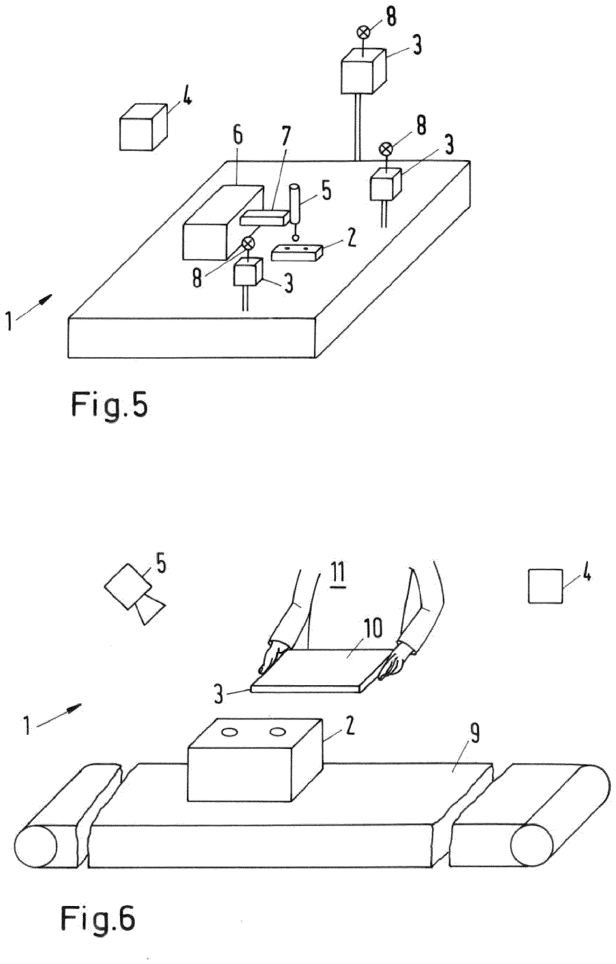

Fig. 1 zeigt ein schematisches Flussdiagramm eines erfindungsgemäßen Verfahrens zur Vermessung eines Bauteils 2 (siehe z.B. Fig. 5). In einem ersten Messschritt S1 erfolgt eine erste, dreidimensionale Vermessung des Bauteils 2 mit einem ersten Sensor 3 bzw. mit mehreren Sensoren 3 einer ersten Sensormenge (siehe Fig. 5). In einem Erzeugungsschritt S2 wird dann in Abhängigkeit der im ersten Messschritt S1 erzeugten Messdaten ein Prüfplan zur Vermessung mindestens eines Abschnitts des Bauteils 2 erzeugt, insbesondere mittels einer Auswerteeinrichtung 4 (siehe Fig. 5). In einem weiteren Messschritt S3 wird dann eine weitere Vermessung des Messobjekts 2 bzw. eines Abschnitts des Bauteils 2 mit einem weiteren Sensor 5 gemäß des im Erzeugungsschritt S2 erzeugten Prüfplans durchgeführt.

Hierbei ist ein Erfassungsbereich des ersten Sensors 3 bzw. der Sensoren 3 der ersten Sensormenge größer als ein Erfassungsbereich des weiteren Sensors 5. Vorzugsweise ist auch eine Auflösung der vom ersten Sensor 3 bzw. der von den Sensoren 3 der ersten Sensormenge erzeugten Messdaten geringer als die Auflösung der vom weiteren Sensor 5 erzeugten Messdaten.

Nach der ersten und der weiteren Vermessung kann eine Darstellung der Messdaten, beispielsweise durch eine nicht dargestellte Anzeigeeinrichtung, erfolgen, wobei das Bauteil 2 in Abhängigkeit der in der ersten Vermessung erzeugten Messdaten dreidimensional dargestellt wird. Weiter kann dieser Darstellung in zumindest einem Teil die Darstellung der in der weiteren Vermessung erzeugten Messdaten überlagert werden.

Auch ist es möglich, diese Überlagerung auflösungsabhängig vorzunehmen, wobei eine gewünschte Auflösung von einem Nutzer vorgebbar ist und je nach vorgegebener Auflösung der Darstellung auf Grundlage von in der ersten Vermessung erzeugten Messdaten die Darstellung der in der weiteren Vermessung erzeugten Messdaten überlagert wird oder ein Teil der in der ersten Vermessung erzeugten Messdaten ersetzt.

Alternativ oder zusätzlich zu einer solchen auflösungsabhängigen Darstellung kann auch eine auflösungsabhängige Auswertung von Prüfkriterien erfolgen, die vorhergehend erläutert wurde. Diese Auswertung kann durch die in Fig. 5 dargestellte Auswerteeinrichtung oder eine davon verschiedene Auswerteeinrichtung erfolgen.

Bei der Erzeugung des Prüfplans im Erzeugungsschritt S2 kann insbesondere in Abhängigkeit der in der ersten Vermessung erzeugten Messdaten mindestens ein Detailvermessungsabschnitt des Bauteils 2 festgelegt werden, der dann in der weiteren Vermessung mit dem weiteren Sensor 5 vermessen wird.

Durch die Vermessung können Eigenschaften von Prüfmerkmalen des Bauteils 2 bestimmt werden, insbesondere, aber nicht ausschließlich, dimensionelle Eigenschaften wie z.B. eine Länge, Breite, Durchmesser oder eine weitere geometrische Eigenschaft.

Ebenfalls kann auf Grundlage der in der ersten Vermessung erzeugten Messdaten eine Lage des Bauteils 2 in einem Referenzkoordinatensystem, beispielsweise einem globalen Referenzkoordinatensystem oder in einem Koordinatensystem einer Koordinatenmesseinrichtung, festgelegt werden.

Es ist weiter möglich, dass bei Vermessung des Bauteils 2 gemäß des Prüfplans mindestens eine Eigenschaft eines Prüfmerkmals des Bauteils 2 in Abhängigkeit der in der ersten Vermessung erzeugten Messdaten und mindestens eine weitere Eigenschaft dieses Prüfmerkmals oder mindestens eine Eigenschaft eines weiteren Prüfmerkmals in Abhängigkeit der in der weiteren Vermessung erzeugten Messdaten bestimmt wird.

In Fig. 2 ist ein schematisches Flussdiagramm eines erfindungsgemäßen Verfahrens zur Qualitätsprüfung eines Bauteils 2 dargestellt, wobei das Bauteil in einem Bereitstellungsschritt BS in einem zu prüfenden Zustand bereitgestellt wird. Weiter wird in einem ersten Qualitätsprüfungsschritt PS1 eine erste Qualitätsprüfung des Bauteils durchgeführt. Weiter wird in einem Auswerteschritt AS ausgewertet, ob das Bauteil 2 vorbestimmte Qualitätskriterien erfüllt. Ist dies nicht der Fall, so wird ein Verfahren zur Vermessung des Bauteils gemäß der in Fig. 1 dargestellten Ausführungsform durchgeführt, insbesondere die Sequenz aus dem ersten Messschritt S1, dem Erzeugungsschritt S2 und dem weiteren Messschritt S3. Anschließend wird in einem Verifikations-Qualitätsprüfungsschritt PS2 eine weitere Qualitätsprüfung des Bauteils 2, die auch als Verifikations-Qualitätsprüfung bezeichnet werden kann, in Abhängigkeit zumindest der Messdaten, die in der weiteren Vermessung erzeugt wurden, durchgeführt. Zusätzlich kann im Verifikations-Qualitätsprüfungsschritt PS2 eine Qualitätsprüfung auch in Abhängigkeit der im ersten Messschritt S1 erzeugten Messdaten durchgeführt werden. Wird im Auswerteschritt AS detektiert, dass das Bauteil 2 die im ersten Qualitätsprüfungsschritt PS1 geprüften vorbestimmten Qualitätskriterien erfüllt, so wird kein solches Verfahren zur Vermessung durchgeführt.

Erfüllt das vermessene Bauteil 2 vorbestimmte Qualitätskriterien in der Verifikations-Qualitätsprüfung, so kann eine Ausschuss-Klassifikation des Bauteils 2 aufgehoben werden, die beispielsweise im Auswerteschritt AS vorgenommen wurde. Ist dies nicht der Fall, so kann diese Ausschuss-Klassifikation bestätigt werden.

Fig. 3 zeigt ein schematisches Flussdiagramm eines erfindungsgemäßen Verfahrens zur Herstellung eines Bauteils. Vor einem Bearbeitungsschritt BAS wird ein Verfahren zur Vermessung des Bauteils 2 gemäß der in Fig. 1 dargestellten Ausführungsform durchgeführt, insbesondere also die Sequenz aus dem ersten Messschritt S1, dem Erzeugungsschritt S2 und dem weiteren Messschritt S3. Hiernach wird mindestens eine Lage des Bauteils 2 in Abhängigkeit der in der ersten und/oder der weiteren Vermessung erzeugten Messdaten bestimmt. Dann wird in dem Bearbeitungsschritt BAS die Bearbeitung des Bauteils 2 in Abhängigkeit der derart bestimmten Lage durchgeführt. Insbesondere kann die Lage eines Teilabschnitts, beispielsweise eines Prüfmerkmals des Bauteils 2, in Abhängigkeit der in der zweiten Vermessung erzeugten Messdaten bestimmt werden. Hierdurch ergibt sich eine sehr präzise Bearbeitung dieses Abschnitts des Bauteils 2.

In Fig. 4 ist ein schematisches Flussdiagramm eines Verfahrens zur Herstellung eines Bauteils 2 gemäß einer weiteren erfindungsgemäßen Ausführungsform dargestellt. Hierbei wird ein Verfahren zur Vermessung des Bauteils 2 gemäß der in Fig. 1 dargestellten Ausführungsform, also die Sequenz aus dem ersten Messschritt S1, dem Erzeugungsschritt S2 und dem weiteren Messschritt S3 nach einem ersten Bearbeitungsschritt BAS1 durchgeführt. Nach der Durchführung dieser Sequenz wird ein Ist-Bearbeitungszustand des Bauteils in Abhängigkeit der in der ersten und/oder der weiteren Vermessung erzeugten Messdaten bestimmt, insbesondere in Abhängigkeit der in der weiteren Vermessung erzeugten Messdaten. Der Ist-Bearbeitungszustand kann beispielsweise eine Ist-Form des Bauteils 2 sein.

Weiter wird in einem weiteren Bearbeitungsschritt BAS2 eine erneute Bearbeitung des Bauteils 2 durchgeführt, falls der Ist-Bearbeitungszustand um mehr als ein vorbestimmtes Maß von einem Soll-Bearbeitungszustand abweicht. Diese Bearbeitung kann ebenfalls in Abhängigkeit der in der ersten und/oder der weiteren Vermessung erzeugten Messdaten erfolgen. Der Soll-Bearbeitungszustand kann hierbei eine Soll-Form sein.

Die in den Figuren 1, 2, 3 und 4 dargestellten Schritte können hierbei durch eine entsprechende Mess-, Auswerte-, Steuer- oder Bearbeitungseinrichtung bzw. durch die Sensoren 3, 5 durchgeführt werden.

Fig. 5 zeigt eine schematische Darstellung einer Vorrichtung 1 zur Vermessung eines Bauteils 2 gemäß einer ersten Ausführungsform. Die Vorrichtung 1 umfasst eine erste Sensormenge mit Sensoren 3, die in dem in Fig. 5 dargestellten Ausführungsbeispiel Bilderfassungseinrichtungen sind. Diese Sensoren 3 können beispielsweise Sensoren eines stereoskopischen Systems sein, welches eine dreidimensionale Vermessung des Bauteils 2 ermöglicht. Weiter umfasst die Vorrichtung 1 einen weiteren Sensor 5, der als taktiler Sensor einer Koordinatenmesseinrichtung 6 ausgebildet ist. Der taktile Sensor 5 ist an einem beweglichen Teil 7 der Koordinatenmesseinrichtung 6 befestigt und kann im Raum relativ zu einem zu vermessenden Bauteil 2 bewegt werden. Weiter umfasst die Vorrichtung 1 eine Auswerteeinrichtung 4, die als Recheneinrichtung, insbesondere als Mikrocontroller, oder als integrierte Schaltung ausgebildet sein kann. Schematisch dargestellt sind Prüfmerkmale des Bauteils 2, die als zylinderförmige Durchgangslöcher oder zylinderförmige Sacklöcher ausgebildet sein können.

Weiter dargestellt ist, dass die Sensoren 3 der ersten Sensormenge Marker 8 aufweisen bzw. Marker 8 an diesen Sensoren 3 befestigt sind. Diese Marker 8 sind optisch erfassbar. Hierdurch ist es möglich, dass eine Relativlage zwischen den Sensoren 3 der ersten Sensormenge bildbasiert, also durch die Auswertung der von diesen Sensoren 3 erzeugten Bilddaten, bestimmbar ist, wodurch wiederum die dreidimensionale Vermessung des Bauteils 2 durch die Sensoren 3 der ersten Sensormenge in einem Referenzkoordinatensystem ermöglicht wird.

Durch die Auswerteeinrichtung 4, die daten- und/oder signaltechnisch mit den Sensoren 3 der ersten Sensormenge verbunden ist, kann dann eine Auswertung der von diesen Sensoren 3 erzeugten Messdaten erfolgen. Weiter kann durch die Auswerteeinrichtung 4 in Abhängigkeit dieser Messdaten ein Prüfplan erzeugt werden. So kann beispielsweise ebenfalls durch die Auswerteeinrichtung 4 oder eine davon verschiedene Steuereinrichtung die Koordinatenmesseinrichtung 6 derart angesteuert werden, dass durch den weiteren Sensor 5 eine Vermessung des Bauteils 2 oder eines gewünschten Abschnitts des Bauteils 2 gemäß dem Prüfplan erfolgt.

Bei der in Fig. 5 dargestellten Ausführungsform ist ersichtlich, dass ein Erfassungsbereich der Sensoren 3 der ersten Sensormenge größer als der Erfassungsbereich des taktilen Sensors 5 ist.

Weiter ist in Fig. 5 gezeigt, dass die Sensoren 3 der ersten Sensormenge an einem Messtisch der Koordinatenmesseinrichtung 6 ortsfest relativ zu diesem Messtisch angeordnet sind. Somit ergibt sich also, dass der weitere Sensor 5 relativ zum Messtisch bewegbar ist, wobei die Sensoren 3 der ersten Sensormenge nicht relativ zum Messtisch bewegbar sind. Dies führt dazu, dass der weitere Sensor 5 unabhängig von den ersten Sensoren 3 bewegbar ist.

Fig. 6 zeigt eine weitere Ausführungsform einer erfindungsgemäßen Vorrichtung 1 zur Vermessung eines Bauteils 2. Hierbei ist das Bauteil 2 auf einer Transporteinrichtung 9 angeordnet, die beispielsweise als Förderband ausgebildet sein kann. Weiter dargestellt ist ein Tablet-PC 10, der einen als Bilderfassungseinrichtung ausgebildeten ersten Sensor 3 aufweist, wobei mittels dieser Bilderfassungseinrichtung Abbilder von dem Bauteil 2 erzeugbar sind. Dargestellt ist ein Nutzer 11, der die Bilderfassungseinrichtung 3 manuell um das Bauteil 2 herumbewegen kann. Alternativ oder kumulativ kann das Bauteil 2 relativ zur Bilderfassungseinrichtung durch die Transporteinrichtung 9 bewegt werden. Hierbei ist es möglich, dass die Auswerteeinrichtung des Tablet-PC 10 die dreidimensionale Vermessung des Bauteils 2 durchführt, z.B. mittels eines structure-from-motion-basierten Verfahrens. Alternativ ist es möglich, dass die von der Bilderfassungseinrichtung erzeugten Bilddaten an eine Tablet-PC-externe Auswerteeinrichtung 4 übertragen werden, insbesondere in drahtloser Weise, wobei dann die Erzeugung der Messdaten des Bauteils 2 durch die Auswerteeinrichtung 4 auf Basis der derart übertragenen Bilddaten durchgeführt wird.

Weiter kann dann durch die Auswerteeinrichtung 4 in Abhängigkeit der derart erzeugten Messdaten ein Prüfplan zur Vermessung des Bauteils 2 mittels einer als Präzisionskamera ausgebildeten weiteren Sensors 5 erfolgen. Z.B. kann dann die Transporteinrichtung 9 mittels der Auswerteeinrichtung oder einer davon verschiedenen Steuereinrichtung derart gesteuert werden, dass ein gewünschter Abschnitt des Bauteils 2 in einem Erfassungsbereich der Präzisionskamera angeordnet wird. Hierbei ist ein Erfassungsbereich der Bilderfassungseinrichtung des Tablet-PC 10 größer als ein Erfassungsbereich der Präzisionskamera.

### Bezugszeichenliste

- S1: Messchritt
- S2: Erzeugungsschritt
- S3: weiterer Messschritt
- BS: Bereitstellungsschritt
- AS: Auswerteschritt
- PS1: erster Qualitätsprüfungsschritt
- PS2: Verifikations-Qualitätsprüfungsschritt
- BAS: Bearbeitungsschritt
- BAS1: erster Bearbeitungsschritt
- BAS2: weiterer Bearbeitungsschritt
- 1: Vorrichtung zur Vermessung
- 2: Bauteil
- 3: erster Sensor
- 4: Auswerteeinrichtung
- 5: weiterer Sensor
- 6: Koordinatenmesseinrichtung
- 7: beweglicher Teil
- 8: Marker
- 9: Transporteinrichtung
- 10: Tablet-PC
- 11: Nutzer

## Patentansprüche

1. Verfahren zur Vermessung eines Bauteils (2), wobei eine erste, dreidimensionale Vermessung des Bauteils (2) mit einem ersten Sensor (3) oder mehreren Sensoren (3) einer ersten Sensormenge durchgeführt wird, wobei ein Prüfplan für eine weitere Vermessung zumindest eines Abschnitts des Bauteils (2) mit mindestens einem weiteren Sensor (5) in Abhängigkeit der vom ersten Sensor (3) oder den Sensoren (3) der ersten Sensormenge erzeugten Messdaten erzeugt wird, wobei die weitere Vermessung mit dem weiteren Sensor (5) gemäß des Prüfplans durchgeführt wird, **dadurch gekennzeichnet, dass**
bei der Erzeugung des Prüfplans die Prüfmerkmale eines zu vermessenden Bauteils festgelegt werden, wobei ein Erfassungsbereich des ersten Sensors (3) oder der Sensoren (3) der ersten Sensormenge größer als ein Erfassungsbereich des weiteren Sensors (5) ist.

2. Verfahren nach Anspruch 1, **dadurch gekennzeichnet, dass** aus den in der ersten und der weiteren Vermessung erzeugten Messdaten auflösungsabhängige Messdaten erzeugt werden.

3. Verfahren nach Anspruch 1 oder 2, **dadurch gekennzeichnet, dass** eine auflösungsabhängige Darstellung des Bauteils (2) in Abhängigkeit der erzeugten Messdaten erfolgt.

4. Verfahren nach einem der vorangegangenen Ansprüche, **dadurch gekennzeichnet, dass** in Abhängigkeit der in der ersten Vermessung erzeugten Messdaten mindestens ein Detailvermessungsabschnitt festgelegt wird, der dann in der weiteren Vermessung mit dem weiteren Sensor (5) vermessen wird.

5. Verfahren nach einem der vorangegangenen Ansprüche, **dadurch gekennzeichnet, dass** in Abhängigkeit der in der ersten Vermessung erzeugten Messdaten eine Lage des Bauteils (2) bestimmt wird.

6. Verfahren nach einem der vorangegangenen Ansprüche, **dadurch gekennzeichnet, dass** mindestens eine Eigenschaft eines Prüfmerkmals in Abhängigkeit der in der ersten Vermessung erzeugten Messdaten und mindestens eine weitere Eigenschaft des Prüfmerkmals und/oder mindestens eine Eigenschaft eines weiteren Prüfmerkmals in Abhängigkeit der in der weiteren Vermessung erzeugten Messdaten bestimmt wird.

7. Verfahren nach einem der vorangegangenen Ansprüche, **dadurch gekennzeichnet, dass** der erste Sensor (3) oder mindestens ein Sensor (3) der ersten Sensormenge ein Ultraschallsensor, ein optischer Sensor, ein taktiler Sensor, ein Multisensor oder ein tomografischer Sensor ist.

8. Verfahren nach einem der vorangegangenen Ansprüche, **dadurch gekennzeichnet, dass** die dreidimensionale Vermessung mit einem structure-from-motion-Verfahren, mit einem structure-from-shading-Verfahren, mit einem photogrammetrischen Verfahren, mit einem streifenprojektionsbasierten Verfahren, mit einem linienprojektionsbasierten Verfahren, mit einem Random-Pattern-Projektionsbasierten Verfahren, mit einem stereoskopiebasierten Verfahren, mit einem tomografischen Verfahren oder mit einem lichtfeldtechnikbasierten Verfahren erzeugt wird.

9. Verfahren nach einem der vorangegangenen Ansprüche, **dadurch gekennzeichnet, dass** der weitere Sensor (5) während der weiteren Vermessung unabhängig von dem ersten Sensor (3) oder von mindestens einem Sensor (3) der ersten Sensormenge bewegt wird.

10. Verfahren nach einem der vorangegangenen Ansprüche, **dadurch gekennzeichnet, dass** der weitere Sensor (5) an mindestens einem beweglichen Teil (7) einer Koordinatenmesseinrichtung (6) angeordnet ist, wobei der erste Sensor (3) oder mindestens ein Sensor (3) der ersten Sensormenge nicht an dem beweglichen Teil (7) der Koordinatenmesseinrichtung (6) angeordnet ist.

11. Verfahren nach einem der vorangegangenen Ansprüche, **dadurch gekennzeichnet, dass** an einem oder mehreren Sensor(en) (3) der ersten Sensormenge mindestens ein optisch erfassbarer Marker (8) angeordnet ist, wobei in Abhängigkeit einer Erfassung des Markers (8) durch einen weiteren Sensor (3) der ersten Sensormenge eine Relativlage zwischen den Sensoren (3) der ersten Sensormenge bestimmt wird.

12. Verfahren zur Qualitätsprüfung eines Bauteils (2), wobei das Bauteil (2) in einem zu prüfenden Zustand bereitgestellt wird, wobei eine erste Qualitätsprüfung des Bauteils (2) durchgeführt wird, wobei ein Verfahren zur Vermessung gemäß einem der Ansprüche 1 bis 11 durchgeführt wird, wenn das Bauteil (2) mindestens ein Qualitätskriterium bei der ersten Qualitätsprüfung nicht erfüllt, wobei in Abhängigkeit mindestens der Messdaten, die in der weiteren Vermessung erzeugt wurden, eine Verifikations-Qualitätsprüfung des Bauteils (2) durchgeführt wird.

13. Verfahren nach Anspruch 12, **dadurch gekennzeichnet, dass** nach der Verifikations-Qualitätsprüfung eine weitere Qualitätsprüfung eines Bauteils (2) in Abhängigkeit der in einer Vermessung des Bauteils (2) mit dem ersten Sensor (3) oder mit Sensoren (3) der ersten Sensormenge erzeugten Messdaten durchgeführt wird, wobei diese weitere Qualitätsprüfung in Abhängigkeit eines Ergebnisses der vorangegangenen Verifikations- Qualitätsprüfung angepasst wird.

14. Verfahren zur Herstellung eines Bauteils (2), wobei vor einem Bearbeitungsschritt (BAS, BAS2) ein Verfahren zur Vermessung gemäß einem der Ansprüche 1 bis 11 durchgeführt wird und mindestens eine Lage des Bauteils (2) in Abhängigkeit der in der ersten und/oder der weiteren Vermessung erzeugten Messdaten bestimmt wird, wobei der Bearbeitungsschritt (BAS) zur Bearbeitung des Bauteils (2) in Abhängigkeit der derart bestimmten Lage durchgeführt wird und/oder wobei nach einem Bearbeitungsschritt (BAS1) ein Verfahren zur Vermessung gemäß einem der Ansprüche 1 bis 11 durchgeführt wird und mindestens ein Ist-Bearbeitungszustand des Bauteils (2) in Abhängigkeit der in der ersten und/oder der weiteren Vermessung erzeugten Messdaten bestimmt wird, wobei ein weiterer Bearbeitungsschritt (BAS2) zur Bearbeitung des Bauteils (2) durchgeführt wird, falls der Ist-Bearbeitungszustand um mehr als ein vorbestimmtes Maß von einem Soll-Bearbeitungszustand abweicht.

15. Vorrichtung zur Vermessung eines Bauteils (2) umfassend mindestens einen ersten Sensor (3) oder Sensoren (3) einer ersten Sensormenge, einen weiteren Sensor (5) und eine Auswerteeinrichtung (4), wobei durch den ersten Sensor (3) oder die Sensoren (3) der ersten Sensormenge eine erste, dreidimensionale Vermessung des Bauteils (2) durchführbar ist, wobei durch die Auswerteeinrichtung (4) ein Prüfplan für eine weitere Vermessung zumindest eines Abschnitts des Bauteils (2) mit mindestens einem weiteren Sensor (5) in Abhängigkeit der vom ersten Sensor (3) oder den Sensoren (3) der ersten Sensormenge erzeugten Messdaten erzeugbar ist, wobei durch den weiteren Sensor (5) die weitere Vermessung gemäß des Prüfplans durchführbar ist,
**dadurch gekennzeichnet, dass**
bei der Erzeugung des Prüfplans die Prüfmerkmale eines zu vermessenden Bauteils festgelegt werden, wobei ein Erfassungsbereich des ersten Sensors (3) oder der Sensoren (3) der ersten Sensormenge größer als ein Erfassungsbereich des weiteren Sensors (5) ist.

## Claims

1. Method for measuring a component (2), wherein a first, three-dimensional measurement of the component (2) is performed with a first sensor (3) or multiple sensors (3) of a first set of sensors, wherein a test plan for a further measurement of at least one portion of the component (2) with at least one further sensor (5) is produced on the basis of the measurement data produced by the first sensor (3) or the sensors (3) of the first set of sensors, the further measurement with the further sensor (5) being performed according to the test plan, **characterized in that**
the production of the test plan results in the test features of a component that is to be measured being stipulated, a detection range of the first sensor (3) or of the sensors (3) of the first set of sensors being larger than a detection range of the further sensor (5).

2. Method according to Claim 1, **characterized in that** resolution-dependent measurement data are produced from the measurement data produced in the first and the further measurement.

3. Method according to Claim 1 or 2, **characterized in that** a resolution-dependent representation of the component (2) is provided on the basis of the measurement data produced.

4. Method according to one of the preceding claims, **characterized in that** the measurement data produced in the first measurement are taken as a basis for stipulating at least one detail measurement portion that is then measured in the further measurement with the further sensor (5).

5. Method according to one of the preceding claims, **characterized in that** the measurement data produced in the first measurement are taken as a basis for determining a position of the component (2).

6. Method according to one of the preceding claims, **characterized in that** at least one property of a test feature is determined on the basis of the measurement data produced in the first measurement and at least one further property of the test feature and/or at least one property of a further test feature is determined on the basis of the measurement data produced in the further measurement.

7. Method according to one of the preceding claims, **characterized in that** the first sensor (3) or at least one sensor (3) of the first set of sensors is an ultrasonic sensor, an optical sensor, a tactile sensor, a multipurpose sensor or a tomographic sensor.

8. Method according to one of the preceding claims, **characterized in that** the three-dimensional measurement is produced using a structure-from-motion method, using a structure-from-shading method, using a photogrammetric method, using a strip-projection-based method, using a line-projection-based method, using a random-pattern-projection-based method, using a stereoscopy-based method, using a topographic method or using a light-field-technology-based method.

9. Method according to one of the preceding claims, **characterized in that** the further sensor (5) is moved independently of the first sensor (3) or of at least one sensor (3) of the first set of sensors during the further measurement.

10. Method according to one of the preceding claims, **characterized in that** the further sensor (5) is arranged on at least one moving part (7) of a coordinate measuring device (6), the first sensor (3) or at least one sensor (3) of the first set of sensors not being arranged on the moving part (7) of the coordinate measuring device (6).

11. Method according to one of the preceding claims, **characterized in that** at least one optically detectable marker (8) is arranged on one or more sensor (s) (3) of the first set of sensors, a detection of the marker (8) by a further sensor (3) of the first set of sensors being taken as a basis for determining a relative position between the sensors (3) of the first set of sensors.

12. Method for inspecting the quality of a component (2), wherein the component (2) is provided in a state to be inspected, wherein a first quality inspection of the component (2) is performed, wherein a measuring method according to one of Claims 1 to 11 is performed if the component (2) does not satisfy at least one quality criterion during the first quality inspection, wherein at least the measurement data that were produced in the further measurement are taken as a basis for performing a verification quality inspection of the component (2).

13. Method according to Claim 12, **characterized in that** the verification quality inspection is followed by a further quality inspection of a component (2) being performed on the basis of the measurement data produced in a measurement of the component (2) with the first sensor (3) or with sensors (3) of the first set of sensors, this further quality inspection being adapted on the basis of a result of the preceding verification quality inspection.

14. Method for manufacturing a component (2), wherein a machining step (BAS, BAS2) is preceded by a measuring method according to one of Claims 1 to 11 being performed and at least one position of the component (2) being determined on the basis of the measurement data produced in the first and/or the further measurement, wherein the machining step (BAS) for machining the component (2) is performed on the basis of the position determined in this manner and/or wherein a machining step (BAS1) is followed by a measuring method according to one of Claims 1 to 11 being performed and at least one actual machining state of the component (2) being determined on the basis of the measurement data produced in the first and/or the further measurement, wherein a further machining step (BAS2) for machining the component (2) is performed if the actual machining state differs from a target machining state by more than a predetermined measure.

15. Apparatus for measuring a component (2) comprising at least one first sensor (3) or sensors (3) of a first set of sensors, a further sensor (5) and an evaluation device (4), wherein the first sensor (3) or the sensors (3) of the first set of sensors can perform a first, three-dimensional measurement of the component (2), wherein the evaluation device (4) can produce a test plan for a further measurement of at least one portion of the component (2) with at least one further sensor (5) on the basis of the measurement data produced by the first sensor (3) or the sensors (3) of the first set of sensors, the further sensor (5) being able to perform the further measurement according to the test plan,
**characterized in that**
the production of the test plan results in the test features of a component that is to be measured being stipulated, a detection range of the first sensor (3) or of the sensors (3) of the first set of sensors being larger than a detection range of the further sensor (5).

## Revendications

1. Procédé de mesure d'un composant (2), une première mesure tridimensionnelle du composant (2) étant effectuée avec un premier capteur (3) ou plusieurs capteurs (3) d'un premier ensemble de capteurs, un plan de contrôle d'une autre mesure d'au moins une portion du composant (2) étant généré avec au moins un autre capteur (5) en fonction des données de mesure générées par le premier capteur (3) ou les capteurs (3) du premier ensemble de capteurs, l'autre mesure étant effectuée avec l'autre capteur (5) conformément au plan de contrôle,
**caractérisé en ce que**
les caractéristiques de contrôle d'un composant à mesurer sont déterminées lors de la génération du plan de contrôle, une zone de détection du premier capteur (3) ou des capteurs (3) du premier ensemble de capteurs étant plus grande qu'une zone de détection de l'autre capteur (5).

2. Procédé selon la revendication 1, **caractérisé en ce que** des données de mesure dépendant de la résolution sont générées à partir des données de mesure générées à partir de la première mesure et de la mesure suivante.

3. Procédé selon la revendication 1 ou 2, **caractérisé en ce qu'**une représentation du composant (2), dépendant de la résolution, est effectuée en fonction des données de mesure générées.

4. Procédé selon l'une des revendications précédentes, **caractérisé en ce qu'**au moins une portion de mesure détaillée est définie en fonction des données de mesure générées lors de la première mesure, laquelle portion de mesure est ensuite mesurée lors de l'autre mesure avec l'autre capteur (5).

5. Procédé selon l'une des revendications précédentes, **caractérisé en ce qu'**une position du composant (2) est déterminée en fonction des données de mesure générées lors de la première mesure.

6. Procédé selon l'une des revendications précédentes, **caractérisé en ce qu'**au moins une propriété d'une caractéristique de contrôle est déterminée en fonction des données de mesure générées lors de la première mesure et au moins une autre propriété de la caractéristique de contrôle et/ou au moins une propriété d'une autre caractéristique de contrôle sont déterminées en fonction des données de mesure générées lors de l'autre mesure.

7. Procédé selon l'une des revendications précédentes, **caractérisé en ce que** le premier capteur (3) ou au moins un capteur (3) du premier ensemble de capteurs est un capteur à ultrasons, un capteur optique, un capteur tactile, un multi-capteur ou un capteur tomographique.

8. Procédé selon l'une des revendications précédentes, **caractérisé en ce que** la mesure tridimensionnelle est réalisée avec un procédé selon le principe structure-from-motion, un procédé selon le principe structure-from-shading, un procédé photogrammétrique, un procédé basé sur la projection de franges, un procédé basé sur la projection de lignes, un procédé basé sur la projection de motifs aléatoires, un procédé basé sur la stéréoscopie, un procédé tomographique ou un procédé basé sur la technique des champs lumineux.

9. Procédé selon l'une des revendications précédentes, **caractérisé en ce que** l'autre capteur (5) est déplacé pendant l'autre mesure indépendamment du premier capteur (3) ou d'au moins un capteur (3) du premier ensemble de capteurs.

10. Procédé selon l'une des revendications précédentes, **caractérisé en ce que** l'autre capteur (5) est disposé sur au moins une partie mobile (7) d'un module de mesure de coordonnées (6), le premier capteur (3) ou au moins un capteur (3) du premier ensemble de capteurs n'étant pas disposé sur la partie mobile (7) du module de mesure de coordonnées (6).

11. Procédé selon l'une des revendications précédentes, **caractérisé en ce qu'**au moins un marqueur (8) détectable optiquement est disposé sur un ou plusieurs capteur(s) (3) du premier ensemble de capteurs, une position relative entre les capteurs (3) du premier ensemble de capteurs étant déterminée en fonction d'une détection du marqueur (8) par un autre capteur (3) du premier ensemble de capteurs.

12. Procédé de contrôle de la qualité d'un composant (2), le composant (2) étant fourni dans un état à contrôler, un premier contrôle de qualité du composant (2) étant effectué, un procédé de mesure selon l'une des revendications 1 à 11 étant effectué si le composant (2) ne satisfait pas à au moins un critère de qualité lors du premier contrôle de qualité, un contrôle de qualité de vérification du composant (2) étant effectué en fonction au moins des données de mesure qui ont été générées lors de l'autre mesure.

13. Procédé selon la revendication 12, **caractérisé en ce que**, après le contrôle de qualité de vérification, un autre contrôle de qualité d'un composant (2) est effectué en fonction des données de mesure générées avec le premier capteur (3) ou avec des capteurs (3) du premier ensemble de capteurs lors d'une mesure du composant (2), cet autre contrôle de qualité étant adapté en fonction d'un résultat du contrôle de qualité de vérification précédent.

14. Procédé de fabrication d'un composant (2), un procédé de mesure selon l'une des revendications 1 à 11 étant effectué avant une étape de traitement (BAS, BAS2) et au moins une position du composant (2) étant déterminée en fonction des données de mesure générées lors de la première mesure et/ou de l'autre mesure, l'étape de traitement (BAS) étant effectuée pour traiter le composant (2) en fonction de la position ainsi déterminée et/ou un procédé de mesure selon l'une des revendications 1 à 11 étant effectué après une étape de traitement (BAS1) et au moins un état de traitement réel du composant (2) étant déterminé en fonction des données de mesure générées lors de la première mesure et/ou de l'autre mesure, une autre étape de traitement (BAS2) étant effectuée pour traiter le composant (2) si l'état de traitement réel s'écarte d'un état de traitement cible de plus d'une quantité prédéterminée.

15. Dispositif de mesure d'un composant (2), ledit dispositif comprenant au moins un premier capteur (3) ou des capteurs (3) d'un premier ensemble de capteurs, un autre capteur (5) et un module d'évaluation (4), une première mesure tridimensionnelle du composant (2) pouvant être effectuée par le premier capteur (3) ou les capteurs (3) du premier ensemble de capteurs, le module d'évaluation (4) pouvant générer un plan de contrôle d'une autre mesure d'au moins une portion du composant (2) avec au moins un autre capteur (5) en fonction des données de mesure générées par le premier capteur (3) ou les capteurs (3) du premier ensemble de capteurs, l'autre mesure pouvant être effectuée par l'autre capteur (5) selon le plan de contrôle,
**caractérisé en ce que**
les caractéristiques de contrôle d'un composant à mesurer sont déterminées lors de la génération du plan de contrôle, une zone de détection du premier capteur (3) ou des capteurs (3) du premier ensemble de capteurs étant plus grande qu'une zone de détection de l'autre capteur (5).
